# EUROPEAN PATENT APPLICATION

(11) **EP 0 616 282 A1**
(43) Date of publication of application: **21.09.1994**
(21) Application number: 94301216.1
(22) Date of filing: 21.02.1994
(51) Int. Cl.: G06F 1/32

(54) **Display with means for detecting data entry**

(30) Priority: 19.03.1993 GB 9305777
(71) Applicant: International Business Machines Corporation, Armonk, N.Y. 10504 (US)
(72) Inventor: Beeteson, John, Skelmorlie, Ayrshire PA17 5DX (GB); Kerigan, Shaun, Kilmalcolm, Renfrewshire PA13 4PL (GB)
(74) Representative: Williams, Julian David

(57) **Abstract**

A display device is presented for a computer system having a system unit (5), a data entry device (110), and a communication link (140) for transferring data signals between the data entry device (110) and the system unit (5). The display device has a display screen. A drive circuit (134) is provided for generating an image on the display screen in response to an input video signal (R,G,B,H,V) from the system unit (5). Detector means (133) permits detection of data signals travelling between the data entry device (110) and the system unit (5) on the communication link (140).

When no data signals have been detected for a predetermined length of time, a control circuit (131) at least partially disables the drive circuit (134), thus reducing power consumption.

## Description

The present invention relates to a display with power management means responsive to a data entry to a host computer system.

Conventional computer systems generally include a computer system unit, a visual display unit for displaying computer data generated in the computer system unit, and a keyboard for entering data to the computer system unit. In some conventional computer systems, power management in the display is provided by detection of keyboard activity in the system unit. If the operator leaves such a computer system unattended for a period of time, the system unit instructs the display to operate in a standby mode in which the brightness and/or the size of the image displayed is reduced. The system unit instructs the display to restore the brightness and/or size of the image displayed on detection of the next keyboard entry made by the operator. In other conventional computer systems, such power management cannot be provided in the display because the system unit has no way of communicating instructions to the display.

In accordance with the present invention, there is now provided a display device for a computer system having a system unit, a data entry device, and a communication link for transferring data signals between the data entry device and the system unit, the display device comprising: a display screen; a drive circuit for generating an image on the display screen in response to an input video signal from the system unit; and detector means for detecting data signals travelling between the data entry device and the system unit on the communication link.

Preferably, the communication link of the computer system includes a communication cable, and the detector means comprises a sensor for receiving at least a portion of the cable to detect data signals travelling along the cable. The sensor can comprise an electromagnetic sense coil through which the cable can be passed. Alternatively, the sensor can comprise a hall effect probe for mounting against a side of the cable.

In a preferred embodiment of he present invention, the display device comprises first attachment means for connection to the data entry device, second attachment means for connection to the system unit; and coupling means for connecting the first attachment means to the second attachment means to complete the communication link between the data entry device and the system unit. The detector means can be connected to the coupling means. The first attachment means can comprise a connector for receiving an interface cable of the data entry device and the second attachment means can comprise a second interface cable for connection to the system unit.

In a particularly preferred embodiment of the present invention, the display device comprises a timer for generating a count in response to a clock signal, and a control circuit for at least partially disabling the drive circuit in response to the count stored in the timer exceeding a predetermined threshold, the detector means resetting the timer on detection of a data signal travelling between the data entry device and the system unit on the communication link.

Because data entry to the computer system unit is detected by the display, this arrangement advantageously permits power management of the display to be provided independently of the computer system unit. Power can be maintained to low power elements of the drive circuit while the display is operating in standby mode to allow rapid restoration of the displayed image.

In an especially preferred embodiment of the present invention, the display device comprises means for receiving control data from the system unit via data signals sent from the system unit on the communication link.

It will appreciated that the present invention extends to a computer system comprising a system unit; a data entry device; a communication link for transferring data signals between the data entry device and the system unit; and a display device as described above in any of the preceding six paragraphs.

Preferred embodiments of the present invention will now be described with reference to the accompanying drawings in which:
Figure 1 is a block diagram of a conventional computer system;
Figure 2 is a block diagram of a computer system of the present invention;
Figure 3 is a block diagram of a display of the present invention; and
Figure 4 is a block diagram of another display of the present invention.

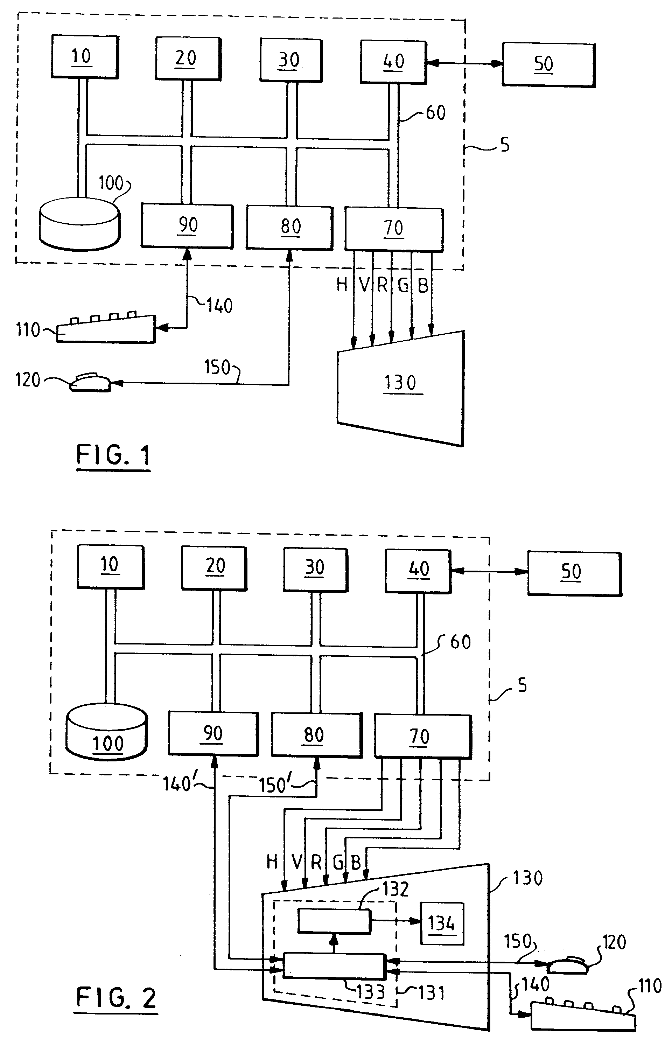

Referring first to Figure 1, a conventional computer system comprises a system unit 5 including a random access memory (RAM) 10, a read only store (ROS) 20, a central processing unit (CPU) 30, a communication adaptor 40, a display adaptor 70, a pointing device adaptor 80, a keyboard adaptor 70, and a mass storage device 100 as a hard disk drive or tape streamer for example, all interconnected by a bus architecture. System unit 5 is connected via adaptor 90 to a keyboard 110. A pointing device 120 such as a touch screen, a tablet, or a mouse is connected to system unit 5 via adaptor 80. System unit 5 is also connected via adaptor 70 to a display 130 such as a cathode ray tube (CRT) display or a liquid crystal display for example. A network 50 of other system units is connected to system unit 5 via communication adaptor 40.

In operation, CPU 30 processes data stored in a combination of RAM 10 and mass storage device 100 under the control of computer program code stored in a combination of ROS 20, RAM 10, and mass storage device 100. Communication adaptor 40 controls transfer of data and computer program code between system unit 5 and other system units in network 50 through communication adaptor 40. Keyboard and mouse adaptors 90 and 80 permit data and instructions to be manually entered into system unit 5 from keyboard 110 and pointing device 120 respectively. Display adaptor 70 translates output data from system unit 5 into video signals, R, G and B, and synchronisation (sync) signals, H and V, for configuring display 130 to generate a visual data output. Bus architecture 60 coordinates data transfer between RAM 10, ROS 20, CPU 30, storage device 100, and adaptors 40, 90, 80 and 70.

Keyboard 110 is connected to adaptor 90 via a keyboard cable 140. Similarly pointing device 120 is connected to adaptor 80 via a pointing device cable 150. Cables 140 and 150 each comprise a clock line, a bidirectional data line, and 5V and 0V power lines. As indicated in IBM PS/2 Hardware Interface Technical Reference Manual-Common Interfaces, section "Keyboard and Auxiliary Device Controller", pages 13 to 16, published by International Business Machines Corporation, Armonk, New York, data is passed along the data line as a series of bytes with header information. The clock lines of cables 140 and 150 are polled by CPU 30 to determine the availability of data.

Referring now to Figure 2, in an example of a computer system of the present invention, display 130 comprises a logic circuit 131 including a detector 133 and a timer 132 having a reset input connected to detector 133. Keyboard 100 and pointing device 110 are connected to detector 133 via cables 140 and 150 respectively. Detector 133 is connected to adaptors 90 and 80 by cables 140' and 150' respectively. In operation, detector 133 detects a keyboard entry from the resulting electrical disturbance to the data line in cable 140. Detector 133 also detects pointing device activity from the resulting electrical disturbance to the data line in cable 150. In other embodiments of the present invention, detector 133 may detect a keyboard entry from the resulting electrical disturbance to the clock line in cable 140, and pointing device activity from the resulting electrical disturbance to the clock line in cable 150.

In operation, the count in timer 132 is continuously incremented by a clock signal (not shown) generated in logic circuit 131. Detector 133 generates a reset pulse on the reset input of timer 132 in response to each detection of a keyboard entry or pointing device activity, detector 133. The count in timer 132 is reset by each reset pulse. If no keyboard entry or pointing device activity is detected, the count in timer 132 continues to increment. When the count in timer 132 reaches a threshold level, threshold logic (not shown) of logic circuit 131 configures drive circuitry 134 of display 130 to operate in a standby mode. In standby mode, drive circuitry 134 is configured to generate an image on the display at a reduced brightness. The brightness of the image when the display is operating in standby mode may be at or near zero. In other embodiments of the present invention, drive circuitry 134 may be configured in standby mode to generate an image on the display of reduced size, or to generate an image of both reduced size and brightness. It will be appreciated that, when drive circuitry 134 is configured to operate in standby mode, the brightness and size of the image may be reduced to zero, leaving power supplied only to low power parts of drive circuitry 134 to facilitate rapid restoration of the image. Display 130 is brought out of standby mode, and the displayed image is restored by drive circuitry 134 in response to a subsequent keyboard entry or pointing device activity. Specifically, logic circuit 131 configures drive circuitry 134 to restore the displayed image in response to the subsequent keyboard entry or pointing device activity detected by detector 133.

In a preferred embodiment of the present invention, detector 133 is also responsive to a NO-OP write or "Escape" code (ESC code) from adaptor 90 to keyboard 110 via cable 140'. A ESC code is a code in a format compatible with the device to which it is written, but unused by and therefore transparent to the device. CPU 30 in system unit 5 is configured by computer program code to determine if the time elapsed since the last keyboard entry or pointing device activity was detected by adaptors 90 and 80 exceeds a pre-stored threshold. The pre-stored threshold corresponds to a time period which is longer than the time period corresponding to the threshold of timer 132 of logic circuit 131 in display 130. Thus, when the pre-stored threshold is reached, display 130 will be operating in standby mode. If the time elapsed exceeds the pre-stored threshold, CPU 30 is configured by computer program code to instruct keyboard adaptor 90 to issue the ESC code to keyboard 110 upon receipt of a request to output fresh display data on display 130. The request to output fresh display data may be in the form of a data transmission from another system unit connected to system unit 5 via the network 50. In display 130, detector 133 is adapted to detect the ESC code on cable 140'. Display 130 is brought out of standby mode, and the displayed image is restored by drive circuitry 134 to display the fresh display data, in response to detection of the ESC code on cable 140'. Specifically, logic circuit 131 configures drive circuitry 134 to restore the displayed image in response to the ESC code detected by detector 133. In other embodiments of the present invention, restoration of display 130 from standby mode may be provoked by issuing a suitable ESC code to pointing device 120 on cable 150', the detector being configured in such cases to detect the ESC code on cable 150'.

In a particularly preferred embodiment of the present invention, where display 130 is a raster scanned cathode ray tube (CRT) display, the standby mode of display 130 has three levels of operation. Logic circuit 131 comprises threshold logic (not shown) for activating each level as a function of the time elapsed since the last keyboard entry or point device activity detected by detector 133. If the count in timer 132 reaches a first predetermined threshold, the threshold logic configures drive circuitry 134 to reduce the brightness of displayed image to at or near zero. This reduces the power consumed by the display by typically 10W for a reverse-video image. 10W typically amounts to 10% of the power consumed by the display during normal operation. If the count in timer 132 reaches a second predetermined threshold greater than the first threshold, the threshold logic configures drive circuitry 134 to reduce the amplitude of the raster deflection signals and to reduce the final anode voltage. If the amplitudes of the raster detection signals and the final anode voltage are reduced to at or near zero, the power consumed by display 130 is reduced by typically 57W. 57W typically amounts to 60% of the power consumed by the display during normal operation. Power may be maintained to some parts of display 130 such as CRT heaters for example, to allow the displayed image to stabilise quickly following a subsequent keyboard entry or pointing device activity. If the count in timer 132 reaches a third predetermined threshold, the threshold logic permits only low voltage (typically 5V) parts of drive circuitry 134 to remain in operation. In an especially preferred embodiment of the present invention where the keyboard and pointing device links to system unit 5 are routed through display 130, the low voltage supply is provided by system unit 5 via the 5V and 0V lines of either cable 140' or 150'. Thus, when system unit 5 is turned off, the 5V and 0V lines subside, and display 130 also turns off, leading to a 100% reduction in power consumption. It will be appreciated that the first, second, and third thresholds may be hard-wired or programmable. In a preferred embodiment of the present invention, the first, second, and third thresholds are set to correspond to elapsed times of 15 minutes, 1 hour, and 4 hours since the last keyboard entry or pointing device activity.

In the embodiment of the present invention shown in Figure 2, keyboard 110 and pointing device 120 are connected to display 130 by cables 150 and 140 and detector 133 is internal to display 130. Cables 150' and 140' then relay keyboard entries and pointing device activities from display 130 to system unit 5. This permits easy management of the cabling associated with the computer system pursuant to minimising desk clutter. In a preferred embodiment of the present invention, cables 140' and 150' are combined with display cables R,G,B,H and V with a signal sleeve to further ease cable management.

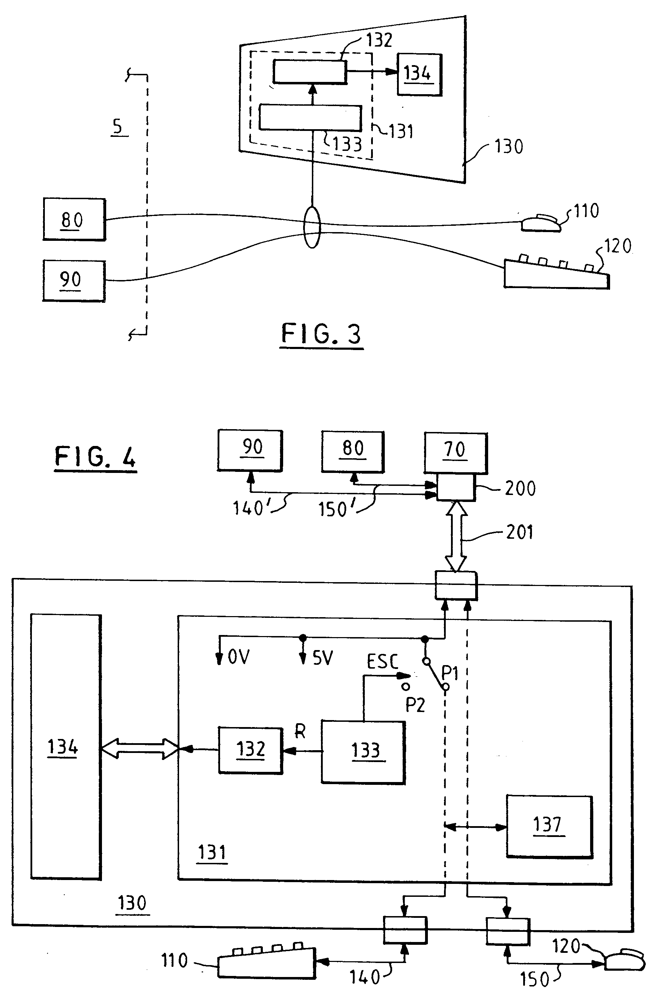

Referring now Figure 3, in another preferred embodiment of the present invention, detector 133 comprises a sensor 135 located external to display 130. Keyboard 120 and pointing device 110 are connected to adaptors 90 and 80 of system unit 5 directly via cables 150 and 140 respectively. Sensor 135 includes a hall effect device or sense coil located in a ring or clip through which cables 150 and 140 pass. Thus, sensor 135 permits non-invasive detection of keyboard entries, pointing device activities and NO-OP writes via the corresponding electrical signals travelling along cables 140 and 150.

Referring now to Figure 4, a modification to the embodiment of the present invention hereinbefore described with reference to Figure 2, is configured to effect two way data communication between system unit 5 and display 130 independently of display adaptor 70. Specifically, detector 133 is configured to selectively connect the data line on cable 140' between adaptor 90 and display 130 either to keyboard 110 at P1 or to logic circuit 131 at P2. To initiate data communication between system unit 5 and display 130 via adaptor 90, CPU 30, under the control of computer program code instructs adaptor 90 to issue a first predetermined ESC code to keyboard 110. Detector 133 is configured to recognise the predetermined ESC code. On receipt of the first ESC code, detector 133 switches data line of cable 150' from keyboard communication to display communication and returns to adaptor 90 a second predetermined ESC code to acknowledge receipt of the first ESC code. CPU 30 can then issue instructions to logic circuit 131 via adaptor 90. Logic circuit 131 reconnects the date line from adaptor 80 back to keyboard 110 after responding to each instruction. The instructions allow system unit 5 to:
a) obtain product identification data from display 130 such as product name, product serial number, and control parameters such as available scan frequency ranges, image dimensions, image attributes (monochrome or colour), and sync signal requirements.
b) obtain assessment data such as power-on hours.
c) obtain status data indicating whether display 130 is turned on or turned off.
d) control power consumption in display 130.
e) adjust operating parameters of display 130 such as picture width, height, brightness and contrast.
f) allow the display user to communicate to system unit 5 via suitable display panel controls.
g) allow diagnostic information to be passed from display 130 to system unit 5.
h) allow two-way information flow between system unit 5 and display 130.

Logic circuit 131 comprises a non-volatile memory (not shown) for storing the data listed in items a), b) and e) above. Because communication of the above information can be effected with very low data rates at relatively infrequent time intervals, the added burden on adaptor 90 and cable 150' is negligible. Thus data communication between system unit 5 and display 130 can be effected in accordance with the present invention through use of a conventional keyboard adaptor and cable. The video and sync signals supplied to display 130 by adaptor 70 remain unaffected. The computer program code for effecting interrogation of logic circuit 131 (item a) above) is retained in system unit 5 as part of the Basic Input Output System (BIOS) code of system unit 5.

Logic circuit 131 receives power at 138 from system unit 5 via the 5V and 0V lines from adaptor 90. Thus, logic circuit 131 can be powered independently of drive circuitry 134. When display 130 is turned off, logic circuit 131 defaults to connecting the data line from keyboard 110 to adaptor 90. Thus, conventional operation of system unit 5 is unaffected when display 130 is turned off. However, because power is supplied to logic circuit 131 by system unit 5, logic circuit 131 can still provide the information listed in items a), b) and c) to system unit 5 when display 130 is turned off. When display 130 is turned on, logic circuit 131 remains inactive until next polled by system unit 5. When logic circuit 131 is next polled, via adaptor 90, a predetermined bit pattern is returned to adaptor 90 to indicate that display 130 is now turned on.

Because the present invention can be implemented without hardware changes to system unit 5, the compatibility of system unit 5 with conventional displays can be preserved by suitable computer program code. For example, if a conventional display is connected to system unit 5, keyboard 110 must be connected directly to adaptor 90. CPU 30 configures adaptor 90 to write the first ESC code to keyboard 110 in accordance with the present invention. However, the acknowledgement (the second ESC code) is not received. CPU 30 is thus informed that a conventional display is attached. CPU 30 can thus differentiate between conventional displays and displays of the present invention.

Logic circuit 131 comprises a keyboard emulator 137 connectable via P1 to adaptor 90. In operation, when system unit 5 is initialised, a power on self test is performed in which adaptor 90 is polled to determine whether or not a keyboard is connected. If adaptor 90 reports that a keyboard is not connected, system unit 5 will not operate. However, in accordance with the present invention, even if keyboard 110 is not connected to display 110, keyboard emulator 137 responds to the poll by indicating to adaptor 90 that a keyboard is connected. Thus, system unit 5 will complete the power on self test regardless of whether keyboard 110 is connected to display 130. This permits display 130 to be used non-keyboard applications such as for example touch-screen applications. Once the power on self test is completed by system unit 5, CPU 30 CPU 30 can interrogate logic circuit 131 via adaptor 90 to determine whether a keyboard is connected to display 130. For ease of cable management, cables 150' and 140' are combined with video and sync signal carrying cables to form at connector 200 to form a composite cable 210 connecting system unit 5 to display 130. Connector 200 is releasably connected by conventional contacts to adaptor 70.

In the embodiment of the present invention described above, the communication link between display 130 and system unit 5 is established via adaptor 90. However, it will be appreciated that in other embodiments of the present invention, a similar communication link may instead be established via adaptor 80. It will also be appreciated that the communication link between system unit 5 and display 130 via adaptor 90 can be used to programme the power management function hereinbefore described.

## Claims

1. A display device for a computer system having a system unit (5), a data entry device (110), and a communication link (140) for transferring data signals between the data entry device (110) and the system unit (5), the display device comprising: a display screen; a drive circuit (134) for generating an image on the display screen in response to an input video signal (R, G, B, H, V) from the system unit (5); and detector means (133) for detecting data signals travelling between the data entry device (110) and the system unit (5) on the communication link (140).

2. A display device as claimed in claim 1, wherein the communication link (140) of the computer system includes a communication cable (140), and the detector means (133) comprises a sensor for receiving at least a portion of the cable to detect data signals travelling along the cable (140).

3. A display device as claimed in claim 2, wherein the sensor comprises an electromagnetic sense coil through which the cable (140) can be passed.

4. A display device as claimed in claim 2, wherein the sensor comprises a hall effect probe for mounting against a side of the cable (140).

5. A display device as claimed in claim 1, comprising first attachment means for connection to the data entry device (110), second attachment means (140') for connection to the system unit (5); and coupling means for connecting the first attachment means to the second attachment means (140') to complete the communication link (140,140') between the data entry device (110) to the system unit (5).

6. A display device as claimed in claim 5, wherein the detector means (133) is connected to the coupling means.

7. A display device as claimed in claim 5 or claim 6, wherein the first attachment means (140) comprises a connector for receiving an interface cable (140) of the data entry device (110) and the second attachment means (140') comprises a second interface cable (140') for connection to the system unit (5).

8. A display device as claimed in any preceding claim, comprising a timer (132) for generating a count in response to a clock signal, and a control circuit (131) for at least partially disabling the drive circuit (134) in response to the count stored in the timer (132) exceeding a predetermined threshold, the detector means (133) resetting the timer (132) on detection of a data signal travelling between the data entry device (110) and the system unit (5) on the communication link (140).

9. A display device as claimed in any preceding claim, comprising means (133) for receiving control data from the system unit (5) via data signals sent from the system unit (5) on the communication link (140).

10. A computer system comprising a system unit (5); a data entry device (110); a communication link (140) for transferring data signals between the data entry device (110) and the system unit (5); and a display device as claimed in any preceding claim.
